# EUROPEAN PATENT SPECIFICATION

(11) **EP 3 724 397 B1**
(45) Date of publication and mention of the grant of the patent: **04.02.2026**
(21) Application number: 17935030.1
(22) Date of filing: 13.12.2017
(51) Int. Cl.: H04L 67/12, G08G 1/14, G08G 1/065, G08G 99/00, E04H 6/00, E04H 6/08, E04H 6/42, E01C 1/04

(54) **TRAFFIC GUIDANCE METHOD AND STRUCTURE**
VERFAHREN UND STRUKTUR ZUR VERKEHRSFÜHRUNG
PROCÉDÉ ET STRUCTURE DE GUIDAGE DE CIRCULATION

(43) Date of publication of application: 21.10.2020
(73) Proprietor: Dubai Aviation Engineering Projects, Dubai (AE)
(72) Inventor: DAVID, Matthieu, Dubai (AE); HAIDAR, Ward, Dubai (AE)
(74) Representative: Dennemeyer & Associates S.A.
(86) International application number: PCT/IB2017/057872
(87) International publication number: WO 2019/116077

(56) References cited:
- EP-B1- 0 386 073
- WO-A1-01/94702
- WO-A1-89/04901
- DE-A1- 4 231 832

## Description

### FIELD

The present application refers to a traffic guidance method and structure. In particular, the present application refers to a traffic guidance method and structure for a traffic system or simply system. This might be for example the departure and / or arrivals area (in front of a building) of an airport, train station, public facilities (hospital, etc.), stadium. The method and structure also can be applied to, for example a logistics hub. In general, any structure or facility where vehicles (land, sea and air) are used to drop off or pick up passengers and / or goods. The area at which the passengers and /or the goods are being dropped off or picked up will be henceforth referred to as a transfer area.

### BACKGROUND

Existing departure and / or arrivals areas (e.g. airports) are frequently congested for a variety of reasons (e.g. concentrated departure peak, high number of passengers using private vehicles or taxis, no vehicle separation, straight line curbside with for example reduced visibility) this inter alia results in operational disruption, safety hazards and poor consumer experience.

European Patent EP 0386073 B1 describes a parking system with superimposed and adjacent parking places and a conveyor device which transports vehicles parked on an entry level to a parking place and vehicles parked on a parking place to an exit level.

To improve the above problems a traffic guidance method and structure according to the appended independent claims is disclosed. The objective technical problem to be solved is to achieve a more constant flow of vehicles to and from one of a first or a second transfer area.

### SUMMARY

A traffic guidance method according to the present application comprises the steps of guiding a vehicle on a first traffic level towards at least a first or second transfer area using traffic guiding devices, disembarking or picking-up of passengers from the vehicle in the first or second transfer area, and guiding the vehicle away from the first or second transfer area on a second traffic level. The first or second transfer areas include a predetermined space and / or number of places for vehicles.

The present invention is provided by a method and apparatus in accordance with independent claims 1 and 5, respectively. Further particular embodiments of the invention are provided by dependent claims 2-4, and 6-10, respectively.

The method of this disclosure enables the vehicles to be guided on different traffic levels to and from a transfer area. Hence, the flow of vehicles can be a more constant flow, since the flows of vehicles (to and from one of the first or the second transfer area) do not interfere with each other. In other words, the vehicles entering one of the transfer areas do not interfere with vehicles leaving another one of the transfer areas which would for instance be the case if the access and the exit of both of the transfer area would be on the same traffic level. However, since the flow upstream of the transfer area is on a different traffic level as the flow downstream of this transfer area, there can be no interference between the vehicles entering and leaving the transfer area. In case of aerial vehicles, the different traffic levels might be a physical structure or airspaces.

The method according to the above aspect may further comprise the step of guiding the vehicle towards the first or second transfer area using guiding devices based on information derived from to the first transfer area. The information is gathered by presence sensors or entrance sensors and exit sensors. This has the advantage that the first and second transfer areas are optimally used. Further, the method enhances the overall performance of the entire traffic system since the flow of the vehicles is more constant if guided, which in turn leads, for example, to lower emissions from the vehicle since the stop and go movement of the traffic in the first or second transfer area is reduced.

The method according to the above aspect may further comprise the step of guiding the vehicle towards the second transfer area from the first transfer area using guiding devices based on information derived from to the first transfer area. The information is gathered by presence sensors or entrance sensors and exit sensors. This has the advantage that, for example, if for unexpected circumstances there is no free spot for the vehicle in the first transfer area, the vehicle can be guided or continue voluntarily towards the second transfer area. This in turn will enhance the flow of vehicles in the traffic system. A circular shape of a drop off area or pick up area enables visual guidance to designated drop-off or pick-up spaces (which is limited if the drop off or pick up areas are straight lines in shape). The method can be applied to any number of the transfer areas.

The method according to the above aspect may further comprise the step of curvedly arranging the vehicles in the at least first or second transfer area. This means that the vehicles guided to the at least first or second transfer area are arranged within the corresponding transfer area in a curved manner when viewed from above the transfer area.

A traffic guidance structure according to another aspect of the present application comprises a first traffic level, a second traffic level and at least two transfer areas. The at least two transfer areas include a first transfer area and a second transfer area. The first traffic level is at a different height from the second traffic level. The second transfer area is accessible from the first transfer area. Each of the at least two transfer areas has a first access to the first traffic level and a second access to the second traffic level. The first access to the first traffic level avoids the other one of the at least two transfer areas and the second access to the second traffic level avoids the other of the at least two transfer areas. The second traffic level may be accessible from the first traffic level but not the other way around to ensure flow only into one direction.

The traffic guidance structure has the advantage that vehicles are guided on different traffic levels to and from one of the transfer areas. Hence, the flow of vehicles can be a constant one since the flows of vehicles (to and from the transfer area) do not interfere with each other.

The traffic guidance structure according to the above aspect may further comprise transfer areas that have a curved shape. This has the advantage that in an area having a given extension, for example along a building, more of the vehicles can be accommodated in comparison to a conventional transfer area being arranged essentially parallel to a building. This has the advantage that the buildings needing at least one transfer area may be smaller in their dimensions since frequently the required capacity of the transfer area dictates at least one dimension of the building.

The traffic guidance system could be integrated into traffic systems that have a dependency on the group of destination of passengers. (for example, a so called 'zoned check-in' which can be dynamic at different times of a day or season)

The traffic guidance structure according to the above aspect may further comprise detection means to gather information concerning a current status of the at least two transfer areas. This has the advantage that the traffic guidance system has essentially real-time information about the situation in the at least two transfer areas. This information may be information concerning occupied and / or free places within either or both of the two transfer areas, timing information (duration of stay within the transfer area, duration of stay at a stop place in the transfer area), type of vehicle (taxi, private vehicle, utility vehicle, official vehicle, etc.), number plates, type of propulsion system of the vehicle (petrol engine, diesel engine, gas engine, hydrogen combustion engine, electrical motor, etc.).

The traffic guidance structure according to the above aspect may further comprise guiding devices or at least one guiding device upstream of the transfer areas to guide vehicles to a selected one of the transfer areas. This has the advantage that the flow of the vehicles upstream of the transfer areas can be guided to a selected one of the transfer areas and consequently the flow of the vehicles can be influenced.

With the traffic guidance structure, according to the above aspect, the guiding devices are controlled by a guidance control system using the information concerning the current status of the at least two transfer areas. This has the advantage that the flow of the vehicles can be guided more precisely. If, for example, in the first transfer area there is no place free for a vehicle, the guidance control system may use the guiding devices to direct vehicles upstream of the transfer areas directly to the second transfer area and thus bypassing the first transfer area. Further, for example, if initially the first transfer area had free places for the vehicles but then there are actually no free places when the vehicles arrive that were guided to the first transfer area based on the initial information that places are free, the guidance control system may guide the vehicles further to the second transfer area.

With the guidance control system and the information concerning the transfer areas it is also possible to predict with a certain probability where and when the next free place for the arriving vehicles will be free and thus use the guiding devices correspondingly to guide the vehicle towards the transfer area with free spaces. This prediction may, for example, be determined based on timing information of the vehicles entering the transfer area and timing information concerning an average length of stay of the vehicles in the transfer areas.

The features and embodiments of the disclosure may be combined freely as needed and / or desired.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings.
Figure 1 is a schematic view of an arrangement according to one embodiment of the present invention
Figure 2 is a flowchart of a traffic guidance method according to the present invention.

### DESCRIPTION OF THE EMBODIMENTS

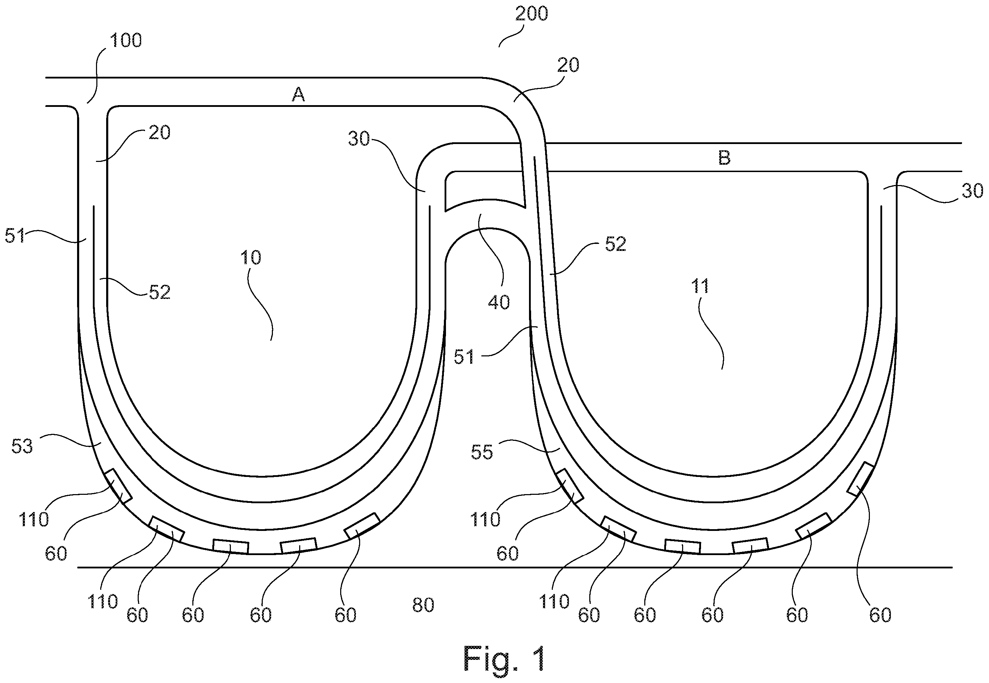

The embodiments will now be explained with reference to the accompanying drawings, wherein like reference numerals designate corresponding or identical elements throughout the various drawings. The overall traffic flow in figures 1 to 3 is from left to right.

Initially referring to figure 1, a traffic guidance structure 200 comprises two curved transfer areas: a first transfer area 10 and a second transfer area 11, a first traffic level A, a second traffic level B, an entrance 20, an exit 30, a connection 40, a maneuvering lane 51, a passing lane 52, a stopping lane 53, stopping positions 60, a building 80, traffic guiding devices 100, and presence sensors 110. However, the traffic guiding devices 100, and presence sensors 110 are optional.

The entrance 20 of each of the first transfer area 10 and the second transfer area 11 is connected to the first traffic level A such that vehicles (not shown) can enter the first transfer area 10 or the second transfer area 11. In this aspect, the vehicles can use the maneuvering lane 51 and the passing lane 52 for maneuvering and driving. The vehicles can stop at the stopping positions 60. A guidance control system optionally can detect if a stopping position for the vehicles is taken by means of a presence sensor 110 that detects the presence of the vehicle in the stopping position 60.

The stopping positions 60 are located in the stopping lane 53. In the stopping positions 60, passengers coming from the building 80 can embark into the vehicles, Passengers disembarking from the vehicles can proceed to the building 80. The vehicles entering one of the first transfer areas 10 or the second transfer area 11 can drive through the entered one of the first transfer area 10 or the second transfer area 11 using the passing lane 52 and switch to the maneuvering lane 51 to maneuver into one of the stopping positions 60. This maneuvering avoids a rupture in the flow of vehicles using the passing lane 52. An area between the stopping positions 60 and the building 80 can be elevated and/or delimited by barriers such that the vehicles are hindered entering this area and it is safe for the passengers to embark or disembark from the vehicles. The arrangement of the stopping positions 60 according to this aspect has the advantage that passengers disembarking from the vehicles or embarking the vehicles do not have to cross any of the lanes used for the vehicles to move on. Another advantage is further that with the curved design of the transfer areas 10 and 11 more vehicles can be accommodated compared to a conventional design with e,g, a straight curbside parallel to a building front. Further, either the maneuvering lane 51 or the passing lane 52 can be omitted. Essentially, only two lanes are necessary for the invention to work. One lane for the vehicles to stop and another for the vehicles to enter the transfer area, to move to a free stopping position and finally to exit the transfer area. Or in case no free stopping position is available, to move to the next transfer area.

The vehicles can leave the first transfer area 10 or the second transfer area 11 by the exit 30 that is in correspondence with the second traffic level B. The first traffic level A and the second traffic levels B are separate roadways such that the vehicles entering one of the transfer areas cannot interfere with the vehicles leaving one of the transfer areas. The first transfer area 10 is connected with the second transfer area 11 by the connection 40. The traffic guiding devices 100 can guide vehicles on the first traffic level A depending on information provided by the presence sensors 110.

In a modification of the above embodiment having the optional guiding system, the presence sensors 110 are replaced by an entrance and exit sensors. The entrance sensor is arranged at the entrance 20 of the corresponding transfer area. The exit sensor is arranged at the exit 30 of the corresponding transfer area. However, the exit sensor has to be arranged in an area of the exit 30 before a vehicle exiting the transfer area reaches the connection 40. The entrance and exit sensors essentially "count" the number of vehicles in the corresponding transfer area. The entrance sensor detects every vehicle that enters the corresponding transfer area and the exit sensor detects every vehicle leaving the corresponding transfer area. The guiding system then can calculate the control the traffic guiding devices 100 accordingly. If for example the number of cars in the first transfer area exceeds the number of stopping positions, the traffic guiding system can control the traffic guiding devices 100 such that vehicles are directly guided to the second transfer area. The modification described above can also be combined with the guiding system having the presence sensors 110 described above. Any combination of the described alternatives is possible (one transfer area having the entrance and exit sensors, another having the presence sensors or a transfer area having both alternatives).

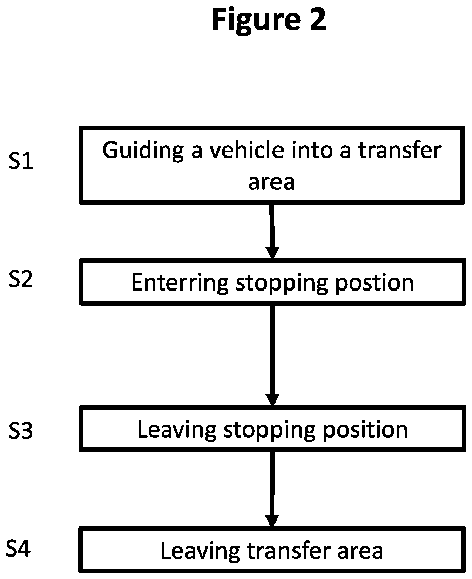

A traffic guidance method according to the present invention is described below with reference to the flowchart depicted in figure 2. The traffic guidance method is applicable to all the aspects of the traffic guidance structure of this disclosure.

In step S1, a vehicle advancing on the first traffic level A towards the entrances 20 of the first transfer area 10 and the second transfer area 11 is guided to the transfer area 10 or 11 by the traffic guiding devices 100 based on information provided by the presence sensors 110 in the first transfer area 10 and the second transfer area 11.

If the presence sensors 110 detect an unoccupied stopping position 60 in the first transfer area 10, the traffic guiding devices 100 will guide the vehicle towards the entrance 20 of the first transfer area 10. If the presence sensors 110 detect that all stopping positions 60 in the first transfer area 10 are occupied, the traffic guiding devices 100 will guide the vehicle towards the entrance 20 of the second transfer area 11.

In step S2, the vehicle enters the unoccupied stopping position 60 in the first transfer area 10 or the second transfer area 11 using the passing lane 52 and the maneuvering lane 51 and passengers can embark or disembark.

In step S3, the vehicle leaves the stopping position 60 using either the maneuvering lane 51, the passing lane 52 (in case of omitted maneuvering lane 51) or the exit lane 54.

In step S4, the vehicle leaves the first transfer area 10 or the second transfer area 11 via the exit 30 towards the second traffic level B.

In a modification of the traffic guidance method the traffic guiding devices 100 and the presence sensors 110 are omitted. In this modification, the driver of the vehicle can decide voluntarily into which one of the transfer areas the vehicle should enter.

In a case in which only the first transfer area 10 is connected to the first traffic level A, the vehicle compulsorily enters the first transfer area 10 via the entrance 20. If no stopping position 60 is vacant, the vehicle continues either to the second traffic level B via the exit 30 or else to the second transfer area 11 via the connection 40.

In all above aspect, any number of additional transfer areas can be added to the number of transfer areas. The disclosed concept is an open concept that can be scaled indefinitely. Further, in all the above embodiments the maneuvering lanes are optional.

## Claims

1. Traffic guidance method using a traffic guidance structure (200) comprising a first traffic level (A), second traffic level (B), a first transfer area (10), a second transfer area (11), the second traffic level being accessible from the first traffic level, the first traffic level being inaccessible from the second traffic level while being in the traffic guidance structure, and traffic guiding devices (100) upstream of the transfer areas for guiding vehicles towards a selected one of the at least first transfer area or second transfer area, the first traffic level being at a different height from the second traffic level, the first transfer area and the second transfer area each having an entrance (20) from the first traffic level, the entrance of the second transfer area bypassing the first transfer area, and the first transfer area and the second transfer area each having an exit (30) that is in correspondence with the second traffic level,
the method comprising the steps of:
guiding vehicles on the first traffic level towards one of at least the first transfer area or the second transfer area using the traffic guiding devices (100);
disembarking or embarking of passengers from the vehicles in the one of the first transfer area or the second transfer area;
guiding the vehicles away from the one of the first transfer area or the second transfer area to the second traffic level.

2. Traffic guidance method according to claim 1, further comprising the step of curvedly arranging the vehicles in the one of the at least a first transfer area or a second transfer area.

3. Traffic guidance method according to claim 1 or 2, further comprising the step of guiding the vehicles towards the one of the first transfer area or the second transfer area using the guiding devices (100) based on information corresponding to the first transfer area, wherein the information is gathered by presence sensors (110), or entrance sensors and exit sensors.

4. Traffic guidance method according to any of claims 1 to 3, further comprising the step of guiding the vehicles towards the second transfer area from the first transfer area using guiding devices (100) based on information corresponding to the first transfer area, wherein the information is gathered by the presence sensors (110) or the entrance sensors and the exit sensors.

5. Traffic guidance structure (200) comprising:
a first traffic level (A);
a second traffic level (B);
a first transfer area (10) and a second transfer area (11), the second traffic level being accessible from the first traffic level, the first traffic level being inaccessible from the second traffic level while being in the traffic guidance structure and
traffic guiding devices (100) upstream of the transfer areas for guiding vehicles on the first traffic level towards a selected one of the at least first transfer area or second transfer area,
wherein:
the first traffic level is at a different height from the second traffic level;
the first transfer area and the second transfer area each have an entrance (20) from the first traffic level, and the entrance of the second transfer area bypasses the first transfer area; and
the first transfer area and the second transfer area each have an exit (30) that is in correspondence with the second traffic level.

6. Traffic guidance structure (200) according to claim 5, wherein at least one of the at least two transfer areas have a curved shape.

7. Traffic guidance structure (200) according to any one of claims 5 or 6, further comprising detection means to gather information concerning a current status of the at least two transfer areas.

8. Traffic guidance structure (200) according to any one of claims 5 to 7, further comprising guiding devices (100) upstream of the at least two transfer areas to guide vehicles to a selected one of the at least two transfer areas.

9. Traffic guidance structure (200) according to claim 8, wherein the guiding devices (100) are controlled by a guidance control system using the information concerning the current status of the at least two transfer areas.

10. Traffic guidance structure (200) according to anyone of claims 5 to 9, comprising three or more transfer areas.

## Patentansprüche

1. Verkehrsleitverfahren unter Verwendung einer Verkehrsleitstruktur (200), umfassend eine erste Verkehrsebene (A), eine zweite Verkehrsebene (B), einen ersten Transferbereich (10), einen zweiten Transferbereich (11), wobei die zweite Verkehrsebene von der ersten Verkehrsebene aus zugänglich ist,
wobei die erste Verkehrsebene nicht von der zweiten Verkehrsebene aus zugänglich ist, während sie in der Verkehrsleitstruktur ist,
und Verkehrsleitvorrichtungen (100), die den Transferbereichen vorgelagert sind, zum Leiten von Fahrzeugen in Richtung eines ausgewählten aus dem mindestens ersten Transferbereich oder zweiten Transferbereich, wobei die erste Verkehrsebene auf einer unterschiedlichen Höhe zur zweiten Verkehrsebene liegt, wobei der erste Transferbereich und der zweite Transferbereich jeweils einen Eingang (20) von der erste Verkehrsebene aus aufweisen, wobei der Eingang des zweiten Transferbereichs an dem ersten Transferbereich vorbeiführt und wobei der erste Transferbereich und der zweite Transferbereich jeweils einen Ausgang (30) aufweisen, der der zweiten Verkehrsebene entspricht,
wobei das Verfahren die folgenden Schritte umfasst:
Leiten von Fahrzeugen auf der ersten Verkehrsebene in Richtung von einem aus mindestens dem ersten Transferbereich oder dem zweiten Transferbereich unter Verwendung der Verkehrsleitvorrichtungen (100);
Aussteigenlassen oder Einsteigenlassen von Passagieren aus den Fahrzeugen in dem einen von dem ersten Transferbereich oder dem zweiten Transferbereich;
Leiten der Fahrzeuge weg von dem ersten Transferbereich oder dem zweiten Transferbereich zu der zweiten Verkehrsebene.

2. Verkehrsleitverfahren nach Anspruch 1, ferner umfassend den Schritt des bogenförmigen Anordnens der Fahrzeuge in dem einen von dem mindestens einen ersten Transferbereich oder einen zweiten Transferbereich.

3. Verkehrsleitverfahren nach Anspruch 1 oder 2, ferner umfassend den Schritt des Leitens der Fahrzeuge in Richtung des einen von dem ersten Transferbereich oder dem zweiten Transferbereich unter Verwendung der Leitvorrichtungen (100) auf Basis von Informationen, die dem ersten Transferbereich entsprechen, wobei die Informationen von Anwesenheitssensoren (110) oder Eingangssensoren oder Ausgangssensoren gesammelt werden.

4. Verkehrsleitverfahren nach einem der Ansprüche 1 bis 3, ferner umfassend den Schritt des Leitens der Fahrzeuge in Richtung des zweiten Transferbereichs von dem ersten Transferbereich unter Verwendung von Leitvorrichtungen (100) auf Basis von Informationen, die dem ersten Transferbereich entsprechen, wobei die Informationen von den Anwesenheitssensoren (110) oder den Eingangssensoren oder den Ausgangssensoren gesammelt werden.

5. Verkehrsleitstruktur (200), umfassend:
eine erste Verkehrsebene (A);
eine zweite Verkehrsebene (B);
einen ersten Transferbereich (10) und einen zweiten Transferbereich (11), wobei die zweite Verkehrsebene von der ersten Verkehrsebene aus zugänglich ist, während die erste Verkehrsebene nicht von der zweiten Verkehrsebene aus zugänglich ist, während sie in der Verkehrsleitstruktur ist
und
Verkehrsleitvorrichtungen (100), die den Transferbereichen vorgelagert sind, zum Leiten von Fahrzeugen auf der ersten Verkehrsebene in Richtung eines ausgewählten aus dem mindestens ersten Transferbereich oder zweiten Transferbereich,
wobei:
die erste Verkehrsebene auf einer unterschiedlichen Höhe zu der zweiten Verkehrsebene ist;
der erste Transferbereich und der zweite Transferbereich jeweils einen Eingang (20) von der erste Verkehrsebene aus aufweisen, und der Eingang des zweiten Transferbereichs an dem ersten Transferbereich vorbeiführt; und
der erste Transferbereich und der zweite Transferbereich jeweils einen Ausgang (30) aufweisen, der der zweiten Verkehrsebene entspricht.

6. Verkehrsleitstruktur (200) nach Anspruch 5, wobei mindestens einer von den mindestens zwei Transferbereichen eine bogenförmige Form aufweist.

7. Verkehrsleitstruktur (200) nach einem der Ansprüche 5 oder 6, ferner umfassend Nachweismittel zum Sammeln von Informationen in Bezug auf einen aktuellen Status der mindestens zwei Transferbereiche.

8. Verkehrsleitstruktur (200) nach einem der Ansprüche 5 bis 7, ferner umfassend Leitvorrichtungen (100), die den mindestens zwei Transferbereichen vorgelagert sind, um Fahrzeuge zu einem ausgewählten der mindestens zwei Transferbereiche zu leiten.

9. Verkehrsleitstruktur (200) nach Anspruch 8, wobei die Leitvorrichtungen (100) von einem Leitsteuersystem unter Verwendung der Informationen, in Bezug auf den aktuellen Status der mindestens zwei Transferbereiche gesteuert werden.

10. Verkehrsleitstruktur (200) nach einem der Ansprüche 5 bis 9, ferner umfassend drei oder mehr Transferbereiche.

## Revendications

1. Procédé de guidage de circulation utilisant une structure de guidage de circulation (200) comprenant un premier niveau de circulation (A), un deuxième niveau de circulation (B), une première zone de transfert (10), une deuxième zone de transfert (11), le deuxième niveau de circulation étant accessible à partir du premier niveau de circulation,
le premier niveau de circulation étant inaccessible à partir du deuxième niveau de circulation tout en étant dans la structure de guidage de circulation,
et des dispositifs de guidage de circulation (100) en amont des zones de transfert pour guider des véhicules vers l'une sélectionnée de l'au moins une première zone de transfert ou deuxième zone de transfert, le premier niveau de circulation étant à une hauteur différente du deuxième niveau de circulation, la première zone de transfert et la deuxième zone de transfert ayant chacune une entrée (20) à partir du premier niveau de circulation, l'entrée de la deuxième zone de transfert contournant la première zone de transfert, et la première zone de transfert et la deuxième zone de transfert ayant chacune une sortie (30) qui est en correspondance avec le deuxième niveau de circulation,
le procédé comprenant les étapes de :
guidage de véhicules sur le premier niveau de circulation vers l'une parmi au moins la première zone de transfert ou la deuxième zone de transfert utilisant les dispositifs de guidage de circulation (100) ;
débarquement ou embarquement de passagers à partir des véhicules dans l'une parmi la première zone de transfert ou la deuxième zone de transfert ;
guidage des véhicules à distance de l'une parmi la première zone de transfert ou la deuxième de transfert vers le deuxième niveau de circulation.

2. Procédé de guidage de circulation selon la revendication 1, comprenant en outre l'étape d'agencement en courbe des véhicules dans l'une parmi l'au moins une première zone de transfert ou une deuxième zone de transfert.

3. Procédé de guidage de circulation selon la revendication 1 ou 2, comprenant en outre l'étape de guidage des véhicules vers l'une parmi la première zone de transfert ou la deuxième zone de transfert en utilisant les dispositifs de guidage (100) sur la base d'informations correspondant à la première zone de transfert, dans lequel les informations sont recueillies par des capteurs de présence (110) ou des capteurs d'entrée et des capteurs de sortie.

4. Procédé de guidage de circulation selon l'une quelconque des revendications 1 à 3, comprenant en outre l'étape de guidage des véhicules vers la deuxième zone de transfert à partir de la première zone de transfert en utilisant les dispositifs de guidage (100) sur la base d'informations correspondant à la première zone de transfert, dans lequel les informations sont recueillies par les capteurs de présence (110) ou les capteurs d'entrée et les capteurs de sortie.

5. Structure de guidage de circulation (200) comprenant :
un premier niveau de circulation (A) ;
un deuxième niveau de circulation (B) ;
une première zone de transfert (10) et une deuxième zone de transfert (11), le deuxième niveau de circulation étant accessible à partir du premier niveau de circulation, le premier niveau de circulation étant inaccessible à partir du deuxième niveau de circulation tout en étant dans la structure de guidage de circulation
et
des dispositifs de guidage de circulation (100) en amont des zones de transfert pour guider des véhicules sur le premier niveau de circulation vers l'une sélectionnée parmi l'au moins une première zone de transfert ou deuxième zone de transfert,
dans laquelle :
le premier niveau de circulation est à une hauteur différente du deuxième niveau de circulation ;
la première zone de transfert et la deuxième zone de transfert ont chacune une entrée (20) à partir du premier niveau de circulation, et l'entrée de la deuxième zone de transfert contourne la première zone de transfert ; et
la première zone de transfert et la deuxième zone de transfert ont chacune une sortie (30) qui est en correspondance avec le deuxième niveau de circulation.

6. Structure de guidage de circulation (200) selon la revendication 5, dans laquelle au moins l'une parmi les au moins deux zones de transfert a une forme incurvée.

7. Structure de guidage de circulation (200) selon l'une quelconque des revendications 5 ou 6, comprenant en outre des moyens de détection pour recueillir des informations concernant un état actuel des au moins deux zones de transfert.

8. Structure de guidage de circulation (200) selon l'une quelconque des revendications 5 à 7, comprenant en outre des dispositifs de guidage (100) en amont des au moins deux zones de transfert pour guider des véhicules vers l'une sélectionnée parmi les au moins deux zones de transfert.

9. Structure de guidage de circulation (200) selon la revendication 8, dans laquelle les dispositifs de guidage (100) sont commandés par un système de commande de guidage en utilisant les informations concernant l'état actuel des au moins deux zones de transfert.

10. Structure de guidage de circulation (200) selon l'une quelconque des revendications 5 à 9, comprenant trois zones de transfert ou plus.
